# FASCICULE DE BREVET EUROPEEN

(11) **EP 0 642 705 B1**
(45) Date de publication et mention de la délivrance du brevet: **28.08.1996**
(21) Numéro de dépôt: 93909702.8
(22) Date de dépôt: 26.05.1993
(51) Int. Cl.: H02K 49/06, H02K 49/02

(54) **COUPLEUR INDUCTIF**
INDUKTIVER KUPPLER
INDUCTIVE COUPLER

(30) Priorité: 27.05.1992 BE 9200487
(43) Date de publication de la demande: 15.03.1995
(73) Titulaire: NOBREAK POWER S.A., B-4460 Grace-Hollogne (BE)
(72) Inventeur: KUPISIEWICZ, Stefan, B-4634 Soumagne (BE); SCHOEBRECHTS, Jacques, B-4634 Soumagne (BE)
(74) Mandataire: Donné, Eddy
(86) Numéro de dépôt international: BE9300027
(87) Numéro de publication internationale: WO9324986

(56) Documents cités:
- FR-A- 1 001 234
- FR-A- 1 029 219
- GB-A- 16 095
- GB-A- 564 665
- US-A- 1 702 755

## Description

L'invention concerne un coupleur inductif comprenant deux éléments rotatifs autour d'un axe de rotation commun, un des éléments entourant au moins partiellement l'autre, une bobine d'excitation alimentée en courant continu et entourant l'axe de rotation de manière à ce qu'un des éléments susdits forme un circuit magnétique principal et des moyens d'alimentation en courant continu de cette bobine, l'élément formant le circuit principal possèdant une partie intérieure et une partie extérieure entourant à une certaine distance la partie intérieure en créant un espace entre ces parties, l'autre élément comprenant une partie intermédiaire située dans cet espace, deux entrefers étant formés, c'est-à-dire un entrefer intérieur entre la partie intérieure susdite et la partie intermédiaire et un entrefer extérieur entre cette partie intermédiaire et la partie extérieure susdite, tandis quela surface intérieure de la partie extérieure et la surface extérieure de la partie intérieure sont pourvues de discontinuités de sorte que les entrefers présentent également au moins une discontinuité, que des barres conductrices dirigées axialement sont montées sur la partie intermédiaire et reliées par leurs extrémités de manière à obtenir un couple électromagnétique entre la partie intermédiaire et l'ensemble des parties intérieure et extérieure lorsque cette partie intermédiaire et cet ensemble sont en mouvement relatif, et que la discontinuité des surfaces intérieure de la partie extérieure et extérieure de la partie intérieure est telle que ces parties présentent des pôles régulièrement distribués autour de l'axe de rotation.

De tels coupleurs présentent l'avantage qu'ils ne possèdent pas de garnitures de friction comme les coupleurs mécaniques ou électro-mécaniques. Ces garnitures ont le désavantage de s'user rapidement et peuvent se carboniser ou s'effriter suite à un échauffement excessif dû au glissement lors de couplages successifs.

Des coupleurs inductifs connus sur le marché comprennent une partie menante formée par un arbre et une carcasse creuse montée sur celui-ci et une partie menée montée à l'intérieur de la carcasse. Ces deux parties possèdent cependant une grande masse et le moment d'inertie PD² est énorme. Pour un couple statique sous tension nominale de 4000 Nm, le moment d'inertie de la partie menante peut atteindre 32,5 kgm². En plus le couple de démarrage est faible.

Ces moments d'inertie de masse élevés, ce couple de démarrage faible et Leur encombrement rendent ces coupleurs inductifs connus inapplicables dans certains cas, par exemple dans des systèmes d'alimentation électrique sans coupures.

De tels systèmes d'alimentation sont utilisés pour compenser les perturbations sur le réseau électrique et pour assurer la continuité et fiabilité de l'alimentation électrique, ce qui pour certains usagers est primordial. Ceci est par exemple d'une importance capitale pour certaines entreprises et sociétés de services fortement informatisées et/ou automatisées.

De tels systèmes comprennent souvent un ensemble formé par une machine synchrone avec son excitateur et un accumulateur d'énergie cinétique, un moteur thermique et un coupleur reliant en cas de panne du réseau le moteur thermique à l'ensemble susdit. Normalement, le couplage est effectué après démarrage du moteur, lorsque la partie du coupleur reliée au moteur a atteint la vitesse de la partie du coupleur reliée à l'ensemble. En cas de non-démarrage du moteur, le couplage est réalisé quand même et le démarrage du moteur est forcé par l'ensemble ou plus précisement par l'accumulateur d'énergie cinétique.

Il est évident que dans un tel cas, du fait des vitesses relatives élevées, un coupleur avec garnitures de friction souffre énormement et qu'il serait avantageux de pouvoir utiliser un coupleur inductif. Cependant, les coupleurs inductifs connus ne permettent pas une telle utilisation.

Un coupleur inductif du genre décrit plus haut est connu de FR-A-1.001.234. Dans ce coupleur, aussi bien la partie extérieure que la partie intérieure de l'un des éléments rotatifs sont pourvues de discontinuités formant des pôles, mais ces pôles sont lisses. Ce coupleur n'utilise par conséquent qu'essentiellement le couple dynamique. Des forces électromotrices ne sont engendrées dans la partie intermédiaire qu'en cas de mouvement relatif entre cette partie intermédiare et les autres parties.

L'invention a pour but de remédier à ces inconvénients et de procurer un coupleur inductif compact, ayant un couple de démarrage relativement fort et surtout possédant un moment d'inertie relativement faible, et qui est donc en particulier utilisable dans des systèmes d'alimentation électriques sans coupures du genre décrit ci-devant.

Dans ce but, chacun des pôles est pourvu d'une denture comprenant au moins deux dents et la partie intermédiaire est pourvue aussi bien du côté extérieur que du côté intérieur d'une denture continue sur toute sa circonférence, les dents intérieures étant situées radialement à l'opposé des dents extérieures.

A cause de la discontinuité dans les entrefers, le retour du flux à travers la partie intermédiaire engendre en cas de mouvements relatifs, des courants variant de direction dans la partie intermédiaire et un flux variant continuellement dans les barres conductrices. Lorsque les vitesses relatives deviennent faibles, les parties intérieure et extérieure d'une part, et la partie intermédiaire d'autre part, tendent à occuper une position de reluctance minimum. La partie intermédiaire peut être très mince et posséder par conséquent une inertie très faible. un excentrement de la partie intermédiaire par rapport aux parties extérieure et intérieure ne provoquera pas de collage magnétique. Le flux magnétique doit traverser deux entrefers et la distance globale que ce flux doit traverser reste constante. un flux non-symétrique radialement doit nécessairement transiter par la partie intermédiaire qui, étant donné qu'elle est mince, sera immédiatement saturée.

Un coupleur inductif possédant des parties extérieure et intérieure dentées en face des entrefers est décrit dans GB-A-16.095, mais les dentures de ces parties ne sont pas présentes d'une manière discontinue sur tout le contour. De ce fait, ce coupleur ne donne qu'un couple dynamique très petit au niveau des entrefers, ce qui rend le coupleur inapte a être utilisé dans les systèmes d'alimentation susdits. A cause du manque de discontinuités, la fréquence des courants induits dans les barres est relativement élevée et il est impossible d'obtenir des courants élevés dans ces barres lorsque le glissement entre les éléments rotatifs est maximal.

Efficacement, les pôles de la partie intérieure sont décalés par rapport aux pôles de la partie extérieure et des paires de barres sont montées sur la partie intermédiaire, chaque paire comprenant une barre intérieure adjacente à l'entrefer intérieur et radialement opposée à celle-ci une barre extérieure adjacente à l'entrefer extérieur.

D'autres particularités et avantages de l'invention ressortiront de la description suivante d'un coupleur inductif selon l'invention. Cette description n'est donnée qu'à titre d'exemple non-limitatif et avec référence aux dessins annexés, dans lesquels:
La figure 1 est un schéma, partiellement en coupe, d'un système d'alimentation électrique sans coupures comprenant un coupleur inductif selon l'invention;
la figure 2 représente une coupe selon la ligne II-II de la figure 1, montrant le coupleur, à une échelle plus grande;
la figure 3 représente une coupe axiale selon la ligne III-III de la figure 2;
la figure 4 est une vue axiale de l'élément menant du coupleur de la figure 2;
la figure 5 est une vue axiale analogue a celle de la figure 4, mais de l'élément mené du coupleur;
la figure 6 est une coupe transversale analogue à celle de la figure 2, mais concernant une autre forme de réalisaticn du coupleur;
la figure 7 est une coupe axiale analogue à celle de la figure 3, mais à une échelle plus petite et concernant une autre forme de réalisation du coupleur selon l'invention;
la figure 8 est une coupe axiale analogue à celle de la figure 7, mais concernant encore une autre forme de réalisation du coupleur selon l'invention;
la figure 9 est une coupe axiale analogue à celles des figures 7 et 8, mais concernant encore une autre forme de réalisation du coupleur selon l'invention;

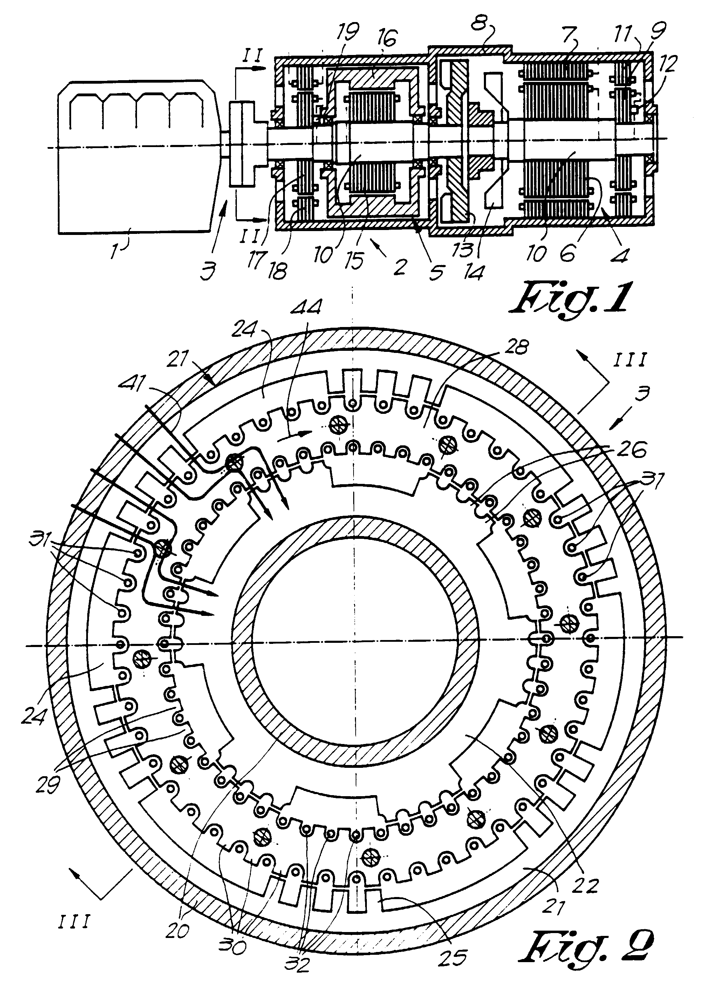

La figure 1 montre un système d'alimentation électrique sans coupures comprenant essentiellement un moteur diesel 1 à régulation de vitesse électronique d'une construction connue, un stato-alternateur 2 également de construction connue et un coupleur inductif 3 selon l'invention pouvant coupler le moteur 1 au stato-alternateur 2.

Le stato-alternateur 2 est composé de deux parties, c'est-à-dire une machine électrique synchrone 4 sans bagues ni balais et un accumulateur d'énergie cinétique 5.

La machine synchrone comprend d'une manière connue un rotor 6 entouré d'un stator 7 monté dans une carcasse 8 et un excitateur consistant en un rotor 9 fixé sur l'axe 10 du rotor 6 et un stator 11 l'entourant, fixé à la carcasse 8. Les enroulements du stator 7 sont alimentés en courant triphasé, ceux du rotor 6 par du courant continu fourni par le rotor 9 de l'excitateur via un redresseur 12. Les enroulements du stator 11 de l'excitateur sont alimentés en courant continu.

L'axe 10 porte encore un volant 13 et un ventilateur 14.

L'accumulateur d'énergie cinétique 5 est monté à l'intérieur de la même carcasse 8 que la machine 2 et comprend un rotor 15 dont l'axe est solidaire de l'axe 10 susdit et qui en réalité constitue l'équivalent du stator d'un moteur asynchrone inversé. Ce rotor 15 est entouré par un tambour 16 constituant l'équivalent d'un rotor de moteur asynchrone. Ce tambour 16 est en rotation libre autour de l'axe 10 susdit.

Le rotor 15 comporte des enroulements pour courant polyphasé et des enroulements pour courant continu, qui génèrent soit un champ magnétique tournant à une vitesse relative, soit un champ magnétique fixe par rapport au rotor 15. Ces enroulements sont connectés à des enroulements du rotor 17 d'un excitateur comprenant également un stator 18. Cet excitateur permet de fournir, d'une part, les courants polyphasés de fréquence adéquate à un premier enroulement du rotor 15 et, d'autre part, à travers un pont redresseur 19 de diodes tournantes, le courant continu nécessaire à produire le champ fixe par rapport au rotor 15.

Lorsque le stato-alternateur 2 reçoit du courant du réseau électrique, les rotors 6, 9, 15 et 17, le volant 13 et le ventilateur 14 tournent ensemble à la même vitesse de rotation. Le tambour 16 de l'accumulateur d'énergie cinétique 5 est entraîné à une vitesse de rotation déterminée par la combinaison du nombre de pôles des enroulements du rotor 17 et du stator 18 de l'excitateur 17, 18 et du nombre de pôles du bobinage polyphasé du rotor 15. Si par exemple les rotors 6, 9, 15 et 17 tournent à 1500 t/min , et le nombre de pôles de l'excitateur 17, 18 et du rotor 15 est douze, le tambour 16 tourne à 3000 t/min, abstraction faite du glissement.

Dès qu'une perturbation du réseau électrique est détectée, le stato-alternateur 2 est désolidarisé de ce réseau et le moteur diesel 1 est démarré. La machine synchrone 4 devient alternateur. L'énergie pour entraîner le rotor 6 est d'abord fournie par la récupération de l'énergie cinétique du tambour 16. Cette récupération est réalisée en injectant dans un second bobinage du rotor 15 un courant continu fourni par le pont redresseur 19 à partir des forces électromotrices induites par un second bobinage du rotor 17. Le rotor 15 et le tambour 16 fonctionnent alors en frein asynchrone et le dosage du courant continu dans un second bobinage du stator 18 permet de maintenir la vitesse du rotor 17. Une telle machine réalisant dans les mêmes circuits magnétiques deux fonctions différentes est inspirée du principe énoncé dans EP-A-0 038 879. Les bobinages du stator 18 et des rotors 15 et 17 commandant ces deux fonctions d'accélération et de récupération du tambour 16 ont une inductance mutuelle nulle les uns avec les autres.

Dès que le moteur 1 a atteint sa vitesse de régime, le coupleur 1 est mis en action, et le moteur 1 produit l'énergie active.

Ce stato-alternateur permet l'obtention d'une impédance de sortie très faible, peut supporter des pointes de courant élevées, élimine rapidement des court-circuits survenant en aval et est insensible à toute perturbation du réseau amont. Il permet donc une excellente régulation de la tension du réseau vers l'aval sans rejet d'harmoniques vers le réseau amont.

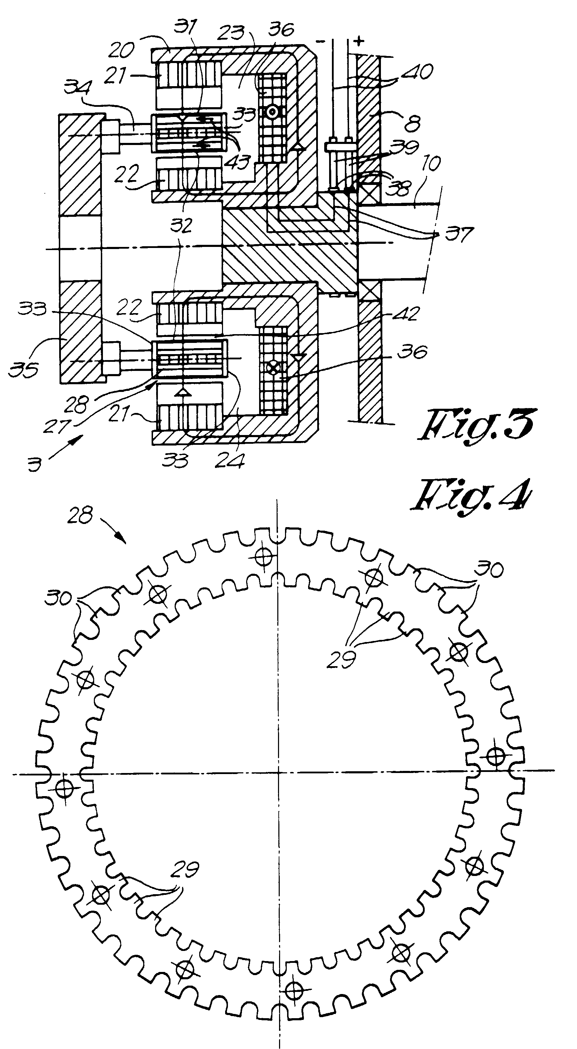

Etant donné que chaque fraction de seconde perdue à la mise en régime du moteur 1 nécessite une augmentation proportionnelle de la réserve d'énergie cinétique et donc de la taille du tambour 16, il est impératif que la vitesse de montée en régime du moteur 1 soit aussi rapide que possible, ce qui veut dire que la partie du coupleur connecté au moteur en formant donc la partie menante doit avoir une inertie et un moment cinétique très faibles, ce qui est réalisé par le coupleur 3 selon l'invention, représenté aux figures 2 à 5.

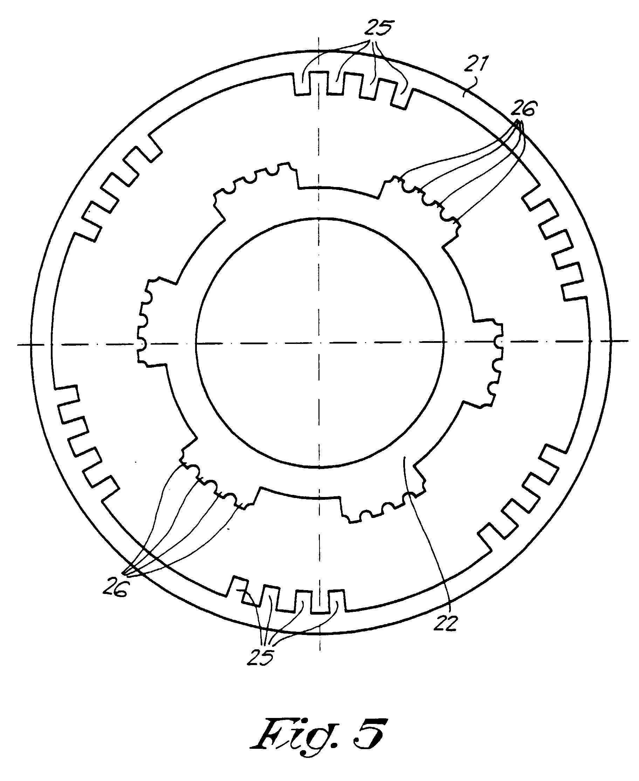

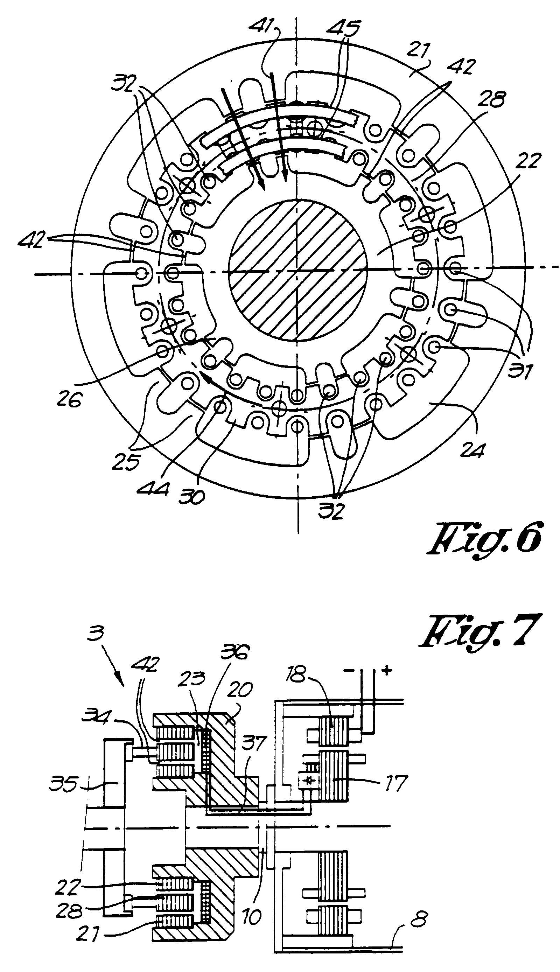

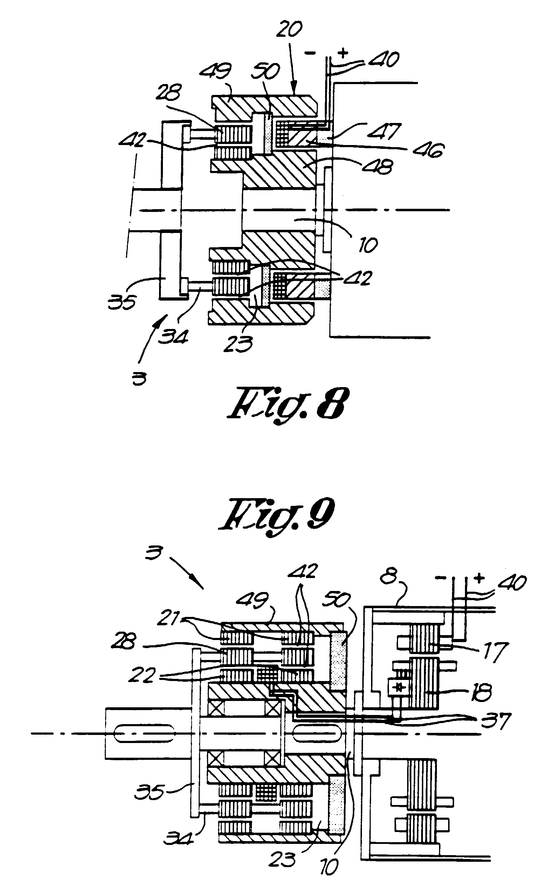

Ce coupleur inductif 3 comprend deux éléments rotatifs co-axiaux 20, 21, 22 et 27. Un de ces éléments, qui est normalement menant en cas d'accouplement et qui est représenté en détail à la figure 5, forme un circuit magnétique principal et est composé essentiellement d'une carcasse métallique 20, d'une partie extérieure 21 formée par un paquet de tôles magnétiques, montée sur la carcasse 20 et d'une partie intérieure 22 formée par un paquet de tôles magnétiques, montée sur la carcasse 20 à l'intérieur de, et coaxialement avec, la partie extérieure 21.

La carcasse 20, qui est montée sur l'axe 10 susdit, possède du côté du moteur 1 une partie annulaire externe et une partie annulaire interne coaxiales avec l'axe 10, un alésage annulaire 23 étant formé entre ces parties de carcasse. Les parties 21 et 22 formées par des tôles magnétiques sont situées dans cet alésage 23, la partie extérieure 21 étant fixée à la partie externe de carcasse, la partie intérieure 22 à la partie interne de carcasse, un espace 24 étant formé entre ces parties 21 et 22.

La face interne de la partie extérieure 21 est constituée de dentures régulièrement espacées de manière à former par exemple six pôles 25 (homopolaires) comprenant chacun quatre dents tandis que la face externe de la partie intérieure 22 est de manière similaire constituée de dentures régulièrement espacées de manière à former le même nombre de pôles 26 qui sont cependant décalées par rapport au pôles 26 tel qu'illustré aux figures 2 et 5.

La carcasse 20 porte une bobine d'excitation 36 qui est située dans l'alésage 23, en face des parties 21 et 22 susdites tel que représenté à la figure 3.

L'autre élément rotatif du coupleur 3 est un élément qui est normalement menant lors de l'accouplement, cet élément étant constitué d'une partie annulaire intermédiaire 28 faite de tôles magnétiques tel que représenté en détail à la figure 4. La face externe et la face interne de cette partie 28 sont pourvues d'une denture ininterrompue dont les dents 29 ou 30 sont régulièrement espacées. Les dents extérieures 29 sont radialement opposées aux dents intérieures 30.

Toutes les dents, c'est-à-dire aussi bien les dents 29 et 30 que les dents des pôles 25 et 26 sont latéralement limitées par des plan radiaux formant entre eux un même angle.

Dans chaque creux entre deux cents extérieures 29 adjacentes, une barre conductrice extérieure 31 est montée. De même, dans chaque creux entre deux dents intérieures 30 adjacentes, une barre conductrice intérieure 32 est montée. Ces barres s'étendent donc parallèlement à l'axe 10. Les extrémités d'une barre extérieure 31 sont reliées aux extrémités de la barre intérieure 32 opposée par des barres de court-circuit 33 de manière à former une spire en court-circuit.

La partie intermédiaire 28 susdite est fixée à l'aide de barres de fixation 34 au volant 35 du moteur diesel 1.

La bobine d'excitation 36 est montée dans l'alésage 23 de la carcasse 20, en face des parties 21, 22 et 28. Cette bobine 36 est alimentée en courant continu d'excitation à travers des fils conducteurs 37 traversant la carcasse et connectés à des bagues 38 montées sur la carcasse 20 et coopérant avec des balais 39 montés sur la carcasse stationnaire 8. Ces balais 39 sont alimentés par des fils conducteurs 40.

Lorsque la bobine 36 n'est pas alimentée, il n'y a aucun couple entre la partie intermédiaire 28 et les parties 21 et 22. Par contre, si la bobine 36 est alimentée, la circulation du courant continu à travers elle engendre un flux magnétique homopolaire dont des lignes d'induction ou de flux 41 sont représentées aux figures 2 et 3. Ces lignes d'induction traversent les deux entrefers 42 respectivement entre la partie extérieure 21 et la partie intermédiaire 28 et entre cette dernière partie et la partie intérieure 22.

Dans la configuration représentée à la figure 2, et étant donné que les pôles 25 et 26 sont décalés, les lignes de flux 41 doivent croiser dans la partie intermédiaire 28 les barres 31 et 32. Ceci a pour résultat des courants à travers la spire formée par ces barres et les barres de court-circuit 33 correspondantes, courants qui sont indiqués à la figure 3 par des flèches 43 au moment où ils s'opposent à la pénétration du flux. Pour un mouvement relatif de la partie 28 par rapport aux parties 21 et 22 indiqué à la figure 2 par la flèche 44, le flux doit traverser les barres 31 et 32 en aval dans le sens des aiguiles d'une montre tandis qu'il doit traverser les barres 31 et 32 en amont dans le sens contraire. Quelques temps plus tard, les barres 31 et 32 qui étaient en amont seront situées en aval et le flux qui doit traverser ces mêmes barres est inversé. Le flux magnétique varie donc au même rythme du passage des pôles 25 et 26 par rapport à la partie intermédiaire 28. Il s'établit donc dans les barres 31 et 32 une force électromotrice induite. Comme ces barres sont reliées entre elles par des barres de court-circuit 33, un courant proportionnel à la tension induite circule dans ces barres. De cette manière un induit rotorique à comportement hétéropolaire dans un circuit purement homopolaire est réalisé. Un couple électromagnétique important est généré .

Lorsque la partie intermédiaire 28 a atteint la vitesse des parties 21 et 22, ce qui peut être réalisé rapidement à cause de la faible inertie de la partie intermédiaire, les dents des pôles 25, les dents extérieures 29, les dents intérieures 30 et les dents des pôles 26 tendent à occuper une position de reluctance minimum. Une variation de position angulaire de la partie intermédiaire 28 par rapport aux parties 21 et 22 cause une variation de reluctance des dentures intérieures et extérieures de la partie 28 ce qui contribue au couple électromagnétique important.

Un excentrement de la partie intermédiaire 28 par rapport aux parties 21 et 22 ne provoquera pas de risque de collage magnétique étant donné que le flux magnétique doit traverser deux entrefers 42 dont la somme reste constante et qu'un flux non symétrique radialement doit nécessairement transiter par la mince partie entre les dents de la partie intermédiaire qui serait immédiatement saturée. En toute circonstance, un effort radial uniforme est assuré.

Lorsque le stato-alternateur 2 est alimenté par le réseau, le moteur diesel 1 et donc la partie intermédiaire 28 du coupleur 3 sont à l'arrêt et l'élément comprenant les parties 21 et 22 et la carcasse 20 est entraîné par la machine électrique 4. Lorsque, en cas de perturbations sur le réseau électrique, le stato-alternateur 2 est coupé du réseau, l'accumulateur d'énergie 5 continue à entraîner l'ensemble 20, 21, 22 susdit et le moteur 1 est démarré. Trois a cinq secondes plus tard, la bobine 36 est alimentée. Le flux magnétique qui traverse la carcasse 20 et les parties 21 et 22, qui se ferme dans la partie intermédiaire 28, et qui traverse les entrefers 42 entre cette partie 28 et les parties 21 et 22, assure la transmission du couple entre le moteur diesel 1 et l'axe 10 du stato-alternateur 2.

Ce système permet le démarrage forcé du moteur 1 lorsque son système de démarrage normal est en défaut. Un tel démarrage est réalisé par une alimentation anticipée de la bobine d'excitation 36 et donc d'une fermeture anticipée du coupleur 3.

Par réglage du courant d'excitation, la valeur du champ magnétique peut varier entre zéro et une valeur maximale, et par conséquent le couple transmis peut varier entre zéro et la valeur maximale correspondant au coupleur. Le coupleur inductif permet des puissances allant de 100 à 1000 KVA à 1500 tr/min.

La forme de réalisation du coupleur inductif 3 selon la figure 6 diffère de celle décrite ci-devant en ce que les pôles 25 et 26 des parties 21 et 22 ne sont pas décalés mais situés les uns radialement en face des autres, et en ce que les extrémités des barres extérieures 31 d'une part et des barres intérieures 32 d'autre part sont reliées entre elles par des anneaux de court-circuit 45 formant deux cages d'écureuil. Dans ce cas le flux, dont deux lignes 41 sont représentées à la figure 6, est dirigé radialement et le fonctionnement est homopolaire. En régime dynamique, les barres 31 et 32 sont traversées par un flux homopolaire qui varie entre une valeur maximum, par exemple pour les barres en aval et en amont des lignes de flux 41 dans la position représentée à la figure 6, et une valeur minimum qui sera atteinte lorsque la partie intermédiaire aura subi une rotation relative correspondant à quatre dents 29. Contrairement à ce qui est représenté à la figure 3, les courants dans deux barres 31 et 32 opposées au moment où ils s'opposent à l'augmentation du flux qui traverse les anneaux de court-circuit 45, sont dans le même sens.

En régime statique, lorsque les parties 21,22 et 28 sont pratiquement synchrones, le fonctionnement est le même que décrit en rapport avec la première forme de réalisation.

L'alimentation en courant continu de la bobine d'excitation 36 peut également être obtenue sans bagues et balais. Dans la forme de réalisation représentée à la figure 7, cette alimentation est réalisée au moyen d'un excitateur auxiliaire dont le rotor est équipé de diodes tournantes formant un redresseur. Comme le stato-alternateur 2 possède déjà un excitateur 17, 18, il est avantageux de réaliser l'excitateur auxiliaire susdit sur le même circuit magnétique que l'excitateur 17, 18, les bobinages d'excitation du stator et du rotor ayant une inductance nulle avec les bobinages d'accélération et de récupération du tambour 16 de l'accumulateur d'énergie 5. Ce principe est identique à celui décrit dans EP-A-0 038 879.

La forme de réalisation selon la figure 8 diffère de celle de la figure 3 essentiellement en ce que la bobine d'excitation 36 n'est pas montée sur l'élément rotatif 20, 21, 22 mais sur un anneau métallique 46 fixé par l'intermédiaire d'un anneau isolant 47 sur la carcasse 8 du stato-alternateur 2. Cette bobine 36 est directement alimentée via les fils conducteurs 40. La bobine 36 se trouve à l'intérieur de la carcasse 20 qui est alors scindée en deux parties, une partie centrale 48 et une partie extérieure 49 entourant cette partie 48, les deux parties 48 et 49 étant maintenues ensembles par une membrane amagnétique 50. Le circuit magnétique est dans ce cas donc composé de trois parties c'est-à-dire la partie de carcasse 48 avec la partie intérieure 22, la partie de carcasse 49 avec la partie extérieure 21 et l'anneau stationnaire 46. Le flux magnétique doit dans ce cas traverser deux entrefers supplémentaires.

En plus, les parties extérieure et intérieure 21 et 22 ne sont pas formées par des tôles magnétiques mais par la matériel même de la carcasse 20 avec laquelle elles forment un tout.

La forme de réalisation du coupleur 3 selon la figure 9 diffère de celle selon la figure 7 en ce que l'élément rotatif formant le circuit magnétique principal comprend deux parties extérieures 21 montées l'une à côté de l'autre sur une partie extérieure 49 de la carcasse 20 et deux parties intérieures 22 montées l'une à côté de l'autre sur une partie centrale 48 de la carcasse 20, carcasse 20 qui est scindée en deux comme dans la forme de réalisation selon la figure 8, les deux parties de carcasse étant maintenues ensemble par une membrane amagnétique 50. Contrairement à cette dernière forme de réalisation, la bobine 36 n'est pas stationnaire, mais elle est montée sur la partie centrale 48 de la carcasse 20, entre les parties intérieures 22. L'autre élément rotatif 27 comprend deux parties intermédiaires 28, une entre chaque paire de parties 21 et 22. Le flux, dont une ligne 41 est représentée à la figure 9 se ferme à travers deux parties intermédiaires 28.

Les coupleurs inductifs 3 décrits ci-devant ne possèdent pas d'éléments de friction et sont par conséquent très fiables. La transmission du couple est purement électromagnétique ce qui réduit l'usure du coupleur. Non seulement le couple dynamique lors du démarrage est important et peut être dosé avec précision en régulant le courant d'excitation, mais le couple d'accrochage magnétique, lorsque les parties 21 et 22 et la partie intermédiaire 28 sont en rotation synchrone, est également important. L'encombrement et l'inertie des coupleurs 3 sont réduits.

Bien que le coupleur inductif soit particulièrement avantageux dans un système d'alimentation électrique tel que décrit ci-devant, il peut remplacer avantageusement dans d'autres applications les coupleurs électromécaniques à friction.

Il est évident que l'invention n'est pas limitée à l'exemple susdécrit et que de très nombreuses variantes d'exécution sont possibles sans sortir du cadre de l'invention.

## Revendications

1. Coupleur inductif comprenant deux éléments rotatifs (20, 21, 22 et 27) autour d'un axe de rotation commun, un des éléments (20, 21, 22) entourant au moins partiellement l'autre (28), une bobine d'excitation (36) alimentée en courant continu et entourant l'axe de rotation de manière à ce qu'un des éléments susdits (20, 21, 22) forme un circuit magnétique principal et des moyens d'alimentation en courant continu (37 a 40) de cette bobine (36), l'élément (20, 21, 22) formant le circuit principal possédant une partie intérieure (22) et une partie extérieure (21) entourant à une certaine distance la partie intérieure (22) en créant un espace (24) entre ces parties, l'autre élément (27) comprenant une partie intermédiaire (28) située dans cet espace (24), deux entrefers (42) étant formés, c'est-à-dire un entrefer (42) intérieur entre la partie intérieure susdite (22) et la partie intermédiaire (28) et un entrefer (42) extérieur entre cette partie intermédiaire (28) et la partie extérieure (21) susdite, tandis quela surface intérieure de la partie extérieure (21) et la surface extérieure de la partie intérieure (22) sont pourvues de discontinuités de sorte que les entrefers (42) présentent également au moins une discontinuité, que des barres conductrices (31 et 32) dirigées axialement sont montées sur la partie intermédiaire (20) et reliées par leurs extrémités de manière à obtenir un couple électromagnétique entre la partie intermédiaire (28) et l'ensemble des parties intérieure et extérieure (21 et 22) lorsque cette partie intermédiaire (28) et cet ensemble (21 et 22) sont en mouvement relatif, et que la discontinuité des surfaces intérieure de la partie extérieure (21) et extérieure de la partie intérieure (22) est telle que ces parties présentent des pôles (25 et 26) régulièrement distribués autour de l'axe de rotation, **caractérisé en ce que** chacun des pôles (25 et 26) est pourvu d'une denture comprenant au moins deux dents et en ce que la partie intermédiaire (28) est pourvue aussi bien du côté extérieur que du côté intérieur d'une denture continue sur toute sa circonférence, les dents intérieures (30) étant situées radialement à l'opposé des dents extérieures (29).

2. Coupleur inductif selon la revendication 1, **caractérisé en ce que** les pôles (26) de la partie intérieure (22) sont décalés par rapport aux pôles (25) de la partie extérieure (21) et que des paires de barres (31 et 32) sont montées sur la partie intermédiaire (28), chaque paire (31 et 32) comprenant une barre intérieure (32) adjacente à l'entrefer (42) intérieur et, radialement opposée à celle-ci, une barre extérieure (31) adjacente à l'entrefer (42) extérieur.

3. Coupleur inductif selon la revendication 1, **caractérisé en ce que** les pôles (26) de la partie intérieure (22) se trouvent radialement en face des pôles (25) de la partie extérieure (21).

4. Coupleur inductif selon la revendication précédente, **caractérisé en ce que** des paires de barres (31 et 32) sont montées sur la partie intermédiaire (28), chaque paire (31 et 32) comprenant une barre intérieure (32) adjacente à l'entrefer (42) intérieur et radialement opposée à celle-ci une barre extérieure (31) adjacente à l'entrefer (42) extérieur, les barres (31 et 32) étant reliées entre elles par des conducteurs de court-circuit (33 et/ou 45).

5. Coupleur inductif selon la revendication 2 ou 4, **caractérisé en ce qu'** une barre conductrice (31, 32) est montée dans chaque creux entre deux dents adjacentes (29, 30) de la partie intermédiaure (28).

6. Coupleur inductif selon la revendication 2 ou 4, **caractérisé en ce que** les barres (31 et 32) de chaque paire sont reliées entre elles par leurs extrémités à l'aide de barres de court-circuit (33).

7. Coupleur inductif selon la revendication 2 ou 4, **caractérisé en ce que** les barres extérieures (31) sont reliées entre elles par leurs extrémités tandis que les barres intérieures (32) sont également reliées entre elles par leurs extrémités.

## Patentansprüche

1. Induktiver Kuppler, umfassend zwei Elemente (20, 21, 22 und 27), die um eine gemeinsame Rotationsachse drehbar sind, wovon eines der Elemente (20, 21, 22) zumindest teilweise das andere (28) umgibt, eine Erregerspule (36), die mit Gleichstrom gespeist wird und die Rotationsachse so umgibt, daß eines der besagten Elemente (20, 21, 22) einen Hauptmagnetkreis und Gleichstrom-Zufuhrmittel (37 bis 40) dieser Spule (36) bildet, wobei das Element (20, 21, 22), das den Hauptkreis bildet, ein inneres Teil (22) und ein äußeres Teil (21), das das innere Teil (22) in einem bestimmten Abstand umgibt, besitzt und somit einen Raum (24) zwischen diesen Teilen bildet, wobei das andere Element (27) ein Zwischenstück (28) umfaßt, das sich in diesem Raum (24) befindet, wobei zwei Luftspalte (42) gebildet werden, mit anderen Worten, ein innerer Luftspalt (42) zwischen besagtem inneren Teil (22) und dem Zwischenstück (28), und ein äußerer Luftspalt (42) zwischen diesem Zwischenstück (28) und besagtem äußeren Teil (21), während die innere Oberfläche des äußeren Teils (21) und die äußere Oberfläche des inneren Teils (22) mit Unterbrechungen versehen sind, derart, daß die Luftspalte (42) ebenfalls zumindest eine Unterbrechung aufweisen, axial ausgerichtete Leiterstäbe (31 und 32) am Zwischenstück (28) montiert sind und an ihren Enden so verbunden sind, daß eine elektromagnetische Koppelung zwischen dem Zwischenstück (28) und der Gesamtheit der inneren und äußeren Teile (21 und 22) erreicht wird, wenn dieses Zwischenstück (28) und diese Gesamtheit (21 und 22) sich in relativer Bewegung befinden, und die Unterbrechung der inneren Oberfläche des äußeren Teils (21) und der äußeren Oberfläche des inneren Teils (22) so verwirklicht ist, daß die Teile Pole (25 und 26) aufweisen, die gleichmäßig um die Rotationsachse verteilt sind, dadurch gekennzeichnet, daß jeder der Pole (25 und 26) mit einer Verzahnung versehen ist, die zumindest zwei Zähne umfaßt, und dadurch, daß das Zwischenstück (28) sowohl an der Außenseite als auch an der Innenseite mit einer sich über den gesamten Umfang erstreckenden Verzahnung versehen ist, wobei die inneren Zähne (30) radial gegenüber den äußeren Zähnen (29) angeordnet sind.

2. Induktiver Kuppler gemäß Anspruch 1, dadurch gekennzeichnet, daß die Pole (26) des inneren Teils (22) in Bezug zu den Polen (25) des äußeren Teils (21) versetzt sind und daß die Stabpaare (31 und 32) auf dem Zwischenstück (28) montiert sind, wobei jedes Paar (31 und 32) einen inneren Stab (32) benachbart dem inneren Luftspalt (42) und, diesem radial entgegengesetzt, einen äußeren Stab (31) benachbart dem äußeren Luftspalt (42) umfaßt.

3. Induktiver Kuppler gemäß Anspruch 1, dadurch gekennzeichnet, daß die Pole (26) des inneren Teils (22) sich radial gegenüber den Polen (25) des äußeren Teils (21) befinden.

4. Induktiver Kuppler gemäß dem vorgenannten Anspruch, dadurch gekennzeichnet, daß die Stabpaare (31 und 32) auf dem Zwischenstück (28) montiert sind, wobei jedes Paar (31 und 32) einen inneren Stab (32) benachbart dem inneren Luftspalt (42) und, diesem radial entgegengesetzt, einen äußeren Stab (31) benachbart zum äußeren Luftspalt (42) umfaßt, wobei die Stangen (31 und 32) untereinander durch Kurzschlußleiter (33 und/oder 45) verbunden sind.

5. Induktiver Kuppler gemäß Anspruch 2 oder 4, dadurch gekennzeichnet, daß ein Leiterstab (31, 32) in jeder Vertiefung zwischen zwei benachbarten Zähnen (29, 30) des Zwischenstücks (28) montiert ist.

6. Induktiver Kuppler gemäß Anspruch 2 oder 4, dadurch gekennzeichnet, daß die Stäbe (31 und 32) jedes Paars an ihren Enden mit Hilfe von Kurzschlußstäben (33) miteinander verbunden sind.

7. Induktiver Kuppler gemäß Anspruch 2 oder 4, dadurch gekennzeichnet, daß die äußeren Stäbe (31) an ihren Enden miteinander verbunden sind, während die inneren Stäbe (32) ebenfalls an ihren Enden miteinander verbunden sind.

## Claims

1. Inductive coupler comprising two rotating elements (20, 21, 22 and 27) around a common axis of rotation, one of the elements (20, 21, 22) at least partially surrounding the other (28), an exciting coil (36) supplied with continuous current and surrounding the axis of rotation in such way that one of the above-mentioned elements (20, 21, 22) forms a main magnetic circuit and supply means of continuous current (37 up to 40) of this coil (36), whereby the element (20, 21, 22) forming the main circuit possesses an inner part (22) and an outer part (21) surrounding at a certain distance the inner part (22) and creating a space (24) between these parts, the other element (27) comprising an intermediate part (28) situated in this space (24), two clearances (42) being formed, namely ar inner clearance (42) between the above-mentioned inner part (22) and the intermediate part (28) and an outer clearance (42) between said intermediate part (28) anc the aforementioned outer part (21), whereby the inner surface of the outer part (21) and the outer surface of the inner part (22) are provided with discontinuities sc that the clearances (42) also show at least one discontinuity, that axially directed conducting bars (31 and 32) are mounted on the intermediate part (28) an connected with their extremities so as to obtain ar electro-magnetic couple between the intermediate part (28) and the combination of the inner and outer parts (21 and 22) when this intermediate part (28) and this combination (21 and 22) are in relative movement, and that the discontinuity of the inner surface of the outer part (21) and the outer surface of the inner part (22) is of such a kind that these parts constitute poles (25 and 26) regularly distributed around the axis of rotation, characterized in that each of the poles (25 and 26) is provided with a denture comprising at least two teeth and in that the intermediate part (28) is provided at its outer side as well as at its inner side with a continuous denture all along its circumference, the inner teeth (30) being radially situated opposite the outer teeth (29).

2. Inductive coupler according to claim 1, characterized in that the poles (26) of the inner part (22) are displaced with regard to the poles (25) of the outer part (21) and that couples of bars (31 and 32) are mounted on the intermediate part (28), each pair (31 and 32) comprising an inner bar (32) adjacent to the inner clearance (42) and, radially opposite, an outer bar (31) adjacent to the outer clearance (42).

3. Inductive coupler according to claim 1, characterized in that the poles of the inner part (22) are situated radially opposite the poles (25) of the outer part (21).

4. Inductive coupler according to the preceding claim, characterized in that the pairs of bars (31 and 32) are mounted on the intermediate part (28), each pair (31 and 32) comprising an inner bar (32) adjacent to the inner clearance (42) and radially opposed thereto an outer bar (31) adjacent to the outer clearance (42), the bars (31 and 32) being connected to each other by short-circuit conductors (33 and/or 45).

5. Inductive coupler according to claim 2 or 4, characterized in that a conducting bar (31, 32) is mounted in each cavity between two adjacent teeth (29, 30) of the intermediate part (28).

6. Inductive coupler according to claim 2 or 4, characterized in that the bars (31 and 32) of each pair are connected to each other with their extremities by means of short-circuit bars (33).

7. Inductive coupler according to claim 2 or 4, characterized in that the outer bars (31) are connected to each other with their extremities whereas the inner bars (31) are also connected to each other with their extremities.
